# EUROPÄISCHE PATENTSCHRIFT

(11) **EP 3 463 960 B1**
(45) Veröffentlichungstag und Bekanntmachung des Hinweises auf die Patenterteilung: **03.06.2020**
(21) Anmeldenummer: 17726892.7
(22) Anmeldetag: 22.05.2017
(51) Int. Cl.: B60K 15/03

(54) **BETRIEBSFLÜSSIGKEITSBEHÄLTER MIT VERSTEIFUNGSSTRUKTUR**
FUEL TANK HAVING A STIFFENING STRUCTURE
RÉSERVOIR DE LIQUIDE DE FONCTIONNEMENT ÉQUIPÉ D'UNE STRUCTURE DE RENFORCEMENT

(30) Priorität: 01.06.2016 DE 102016209544
(43) Veröffentlichungstag der Anmeldung: 10.04.2019
(73) Patentinhaber: Kautex Textron GmbH & Co. KG, 53229 Bonn (DE)
(72) Erfinder: ELSASSER, Carsten, 50259 Pulheim (DE); ROSENSTRÄTER, Sebastian, 50679 Köln (DE)
(74) Vertreter: Richly & Ritschel Patentanwälte PartG mbB
(86) Internationale Anmeldenummer: PCT/EP2017/062279
(87) Internationale Veröffentlichungsnummer: WO 2017/207324

(56) Entgegenhaltungen:
- DE-A1-102009 039 888
- DE-A1-102012 010 058
- DE-A1-102012 010 447
- DE-A1-102013 012 687

## Beschreibung

Die vorliegende Erfindung betrifft einen Betriebsflüssigkeitsbehälter mit einer Versteifungsstruktur.

Betriebsflüssigkeitsbehälter aus thermoplastischem Kunststoff im Sinne der Erfindung sind insbesondere aber nicht ausschließlich Kraftstoffbehälter für Kraftfahrzeuge, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (Abkürzung für High Density Polyethylene; Polyethylen hoher Dichte) für die Herstellung extrusionsblasgeformter Behälter eignet.

Bei Kraftfahrzeugen mit einer Brennkraftmaschine wird bei einer Wärmebeaufschlagung eines Betriebsflüssigkeitsbehälters, insbesondere des Kraftstoffbehälters, die Betriebsflüssigkeit, z.B. der Kraftstoff ebenfalls erwärmt, so dass der Dampfdruck der Betriebsflüssigkeit steigt und der Betriebsflüssigkeitsbehälter mit einem entsprechenden Innendruck beaufschlagt wird, wodurch der Kraftstoffbehälter einer Deformation unterliegt.

Zum Entlüften eines Betriebsflüssigkeitsbehälters in Form eines Kraftstoffbehälters ist dieser mit einem Kraftstoffdampffilter zum Ausfiltern von Treibstoffdämpfen fluidverbunden. Das Kraftstoffdampffilter kann beispielsweise als Aktivkohlefilter ausgebildet sein. Das Aktivkohlefilter wird im Betrieb der Brennkraftmaschine mittels Ansaugluft gespült, so dass in der Aktivkohle gebundene Treibstoffdämpfe der Brennkraftmaschine zugeführt werden können.

Bei Hybrid-Kraftfahrzeugen besteht ferner ein durch die verminderte Betriebszeit der Brennkraftmaschine bedingtes weiteres Problem. Aufgrund der verminderten Betriebszeit der Brennkraftmaschine wird ein mit dem Kraftstoffbehälter fluidverbundenes Aktivkohlefilter entsprechend weniger gespült, so dass auch weniger in der Aktivkohle gebundener Treibstoffdampf herausgespült werden kann. Dies kann zur Folge haben, dass Aktivkohlefilter bei Hybrid-Kraftfahrzeugen größer dimensioniert werden müssen. Ferner wird durch Entlüften des Kraftstoffbehälters über das Aktivkohlefilter aufgrund des Druckabfalls innerhalb des Kraftstoffbehälters weiterer Kraftstoff in die Dampfphase überführt, so dass es vorteilhaft wäre, den Kraftstoffbehälter steifer und/oder druckfester auszuführen. Denn dann kann der Kraftstoffbehälter von dem Aktivkohlefilter mittels eines steuerbaren Ventil fluidgetrennt werden, wodurch das Aktivkohlefilter mit weniger Kraftstoffdämpfen beladen wird. DE 10 2012 010 058 offenbart einen Betriebsflüssigkeitsbehälter für ein Kraftfahrzeug mit einer einen Betriebsflüssigkeitsbehälterinnenraum begrenzende Behälterwand, wobei der Betriebsflüssigkeitsbehälter eine faserverstärkte äußere Versteifungsstruktur die mit einer dem Betriebsflüssigkeitsbehälterinnenraum abgewandten Außenfläche der Behälterwand verbunden ist.

Es ist daher angestrebt, die Druckbeständigkeit von Betriebsflüssigkeitsbehältern, insbesondere von Kraftstoffbehältern und dort insbesondere von Kraftstoffbehältern für Hybrid-Kraftfahrzeuge zu erhöhen. Kraftstoffbehälter für Hybrid-Kraftfahrzeuge sollen vorzugsweise einen Überdruck von bis zu 400 mBar (Millibar) oder mehr und einen Unterdruck von etwa 150 mBar oder mehr standhalten können.

Aus dem Stand der Technik ist es bekannt, einen Betriebsflüssigkeitsbehälter mittels eines zwischen zwei einander gegenüberliegenden Betriebsflüssigkeitsbehälterwänden angeordneten Versteifungselements zu verstärken, wobei das Versteifungselement mit den Betriebsflüssigkeitsbehälterwänden verbunden ist. Ein entsprechender Betriebsflüssigkeitsbehälter ist aus der DE 10 2013 012 687 A1 bekannt. Dieser Betriebsflüssigkeitsbehälter weist eine erhöhte strukturelle Stabilität sowohl bei Überdruck als auch bei Unterdruck auf. Nachteilig bei dieser Art der Versteifung ist jedoch, dass der Betriebsflüssigkeitsbehälterinnenraum nicht mehr gänzlich frei nutzbar ist.

Der vorliegenden Erfindung liegt die Aufgabe zugrunde, einen Betriebsflüssigkeitsbehälter bereitzustellen, der erhöhten Über- und Unterdrücken standhalten kann und der bei Druckbeaufschlagung eine verminderte Deformation aufweist, wobei gleichzeitig gewährleistet bleiben soll, dass ein Betriebsflüssigkeitsbehälterinnenraum ohne oder mit verminderten Einschränkungen nutzbar bleibt.

Die der vorliegenden Erfindung zugrundeliegende Aufgabe wird durch einen Betriebsflüssigkeitsbehälter mit den Merkmalen des Anspruchs 1 gelöst. Vorteilhafte Ausgestaltungen des Betriebsflüssigkeitsbehälters sind in den von Anspruch 1 abhängigen Ansprüchen beschrieben.

Im Genaueren wird die der vorliegenden Erfindung zugrundeliegende Aufgabe durch einen Betriebsflüssigkeitsbehälter für ein Kraftfahrzeug mit einer einen Betriebsflüssigkeitsbehälterinnenraum begrenzende Behälterwand gelöst, wobei der Betriebsflüssigkeitsbehälter dadurch gekennzeichnet ist, dass dieser eine erste faserverstärkte Versteifungsstruktur und eine zweite faserverstärkte Versteifungsstruktur aufweist, wobei die erste Versteifungsstruktur mit einer dem Betriebsflüssigkeitsbehälterinnenraum zugewandten Innenfläche der Behälterwand und die zweite Versteifungsstruktur mit einer dem Betriebsflüssigkeitsbehälterinnenraum abgewandten Außenfläche der Behälterwand verbunden ist, und wobei die Behälterwand derart zumindest abschnittsweise sandwichartig zwischen der ersten Versteifungsstruktur und der zweiten Versteifungsstruktur angeordnet ist, dass die erste Versteifungsstruktur und die zweite Versteifungsstruktur zumindest abschnittsweise überlappend angeordnet sind.

Der erfindungsgemäße Betriebsflüssigkeitsbehälter weist mannigfaltige Vorteilen auf. Aufgrund der sandwichartigen Anordnung der Behälterwand zwischen den ersten und zweiten Versteifungsstrukturen weist die Behälterwand eine erhöhte Biegefestigkeit in beide Biegerichtungen auf, so dass der erfindungsgemäße Betriebsflüssigkeitsbehälter sowohl bei Überdruck als auch bei Unterdruck im Betriebsflüssigkeitsbehälterinnenraum (im Vergleich zum Umgebungsdruck) eine verminderte Deformation aufweist. Somit kann der erfindungsgemäße Betriebsflüssigkeitsbehälter sowohl größeren Überdrücken als auch größeren Unterdrücken standhalten.

Aufgrund der erhöhten Steifigkeit des erfindungsgemäßen Betriebsflüssigkeitsbehälters weist dieser bei einer Überdruckbelastung und/oder bei einer Unterdruckbelastung erheblich verminderte Deformationen auf. Dadurch ist es ermöglicht, dass der erfindungsgemäße Betriebsflüssigkeitsbehälter in einem Kraftfahrzeug mit einem verminderten Abstand zu Karosserieteilen und/oder zu anderen Kraftfahrzeugteilen eingebaut werden kann. Dadurch kann der zum Einbau des Betriebsflüssigkeitsbehälters zur Verfügung stehende Bauraum in einem Kraftfahrzeug verbessert genutzt werden, so dass bei einem vorgegebenen Bauraum in einem Kraftfahrzeug der erfindungsgemäße Betriebsflüssigkeitsbehälter ein vergrößertes Fassungsvermögen aufweist.

Ferner bietet der erfindungsgemäße Betriebsflüssigkeitsbehälter den Vorteil, dass dessen Innenraum ohne oder zumindest mit weniger Einschränkungen nutzbar ist, da im Betriebsflüssigkeitsbehälterinnenraum keine Versteifungsstütze angeordnet sein muss.

Der erfindungsgemäße Betriebsflüssigkeitsbehälter weist trotz einer erhöhten Steifigkeit ein im Vergleich zu aus dem Stand der Technik bekannten Betriebsflüssigkeitsbehältern ein geringeres Gewicht auf. Der erfindungsgemäße Betriebsflüssigkeitsbehälter kann lokal und/oder belastungsabhängig mittels der Versteifungsstrukturen verstärkt sein. Ferner ist der erfindungsgemäße Betriebsflüssigkeitsbehälter kostengünstig herzustellen.

Ein weiterer Vorteil des erfindungsgemäßen Betriebsflüssigkeitsbehälters ist die Eigenschaft, dass bei der Abkühlung des Betriebsflüssigkeitsbehälters nach dessen Herstellung (durch einen Blasformprozess oder durch einen Spritzgussprozess) dessen Behälterwand einen verminderten Verzug aufweist, da die Behälterwand nicht nur einseitig, das heißt an dessen Außenfläche oder dessen Innenfläche mit einer Versteifungsstruktur versehen ist, sondern sowohl an der Außenfläche als auch an der Innenfläche jeweils mit einer Versteifungsstruktur versehen ist.

Für den Fall, dass der Betriebsflüssigkeitsbehälter als Kraftstoffbehälter, insbesondere als Kraftstoffbehälter für Ottokraftstoffe ausgebildet ist, weist der erfindungsgemäße Betriebsflüssigkeitsbehälter hervorragende Barriereeigenschaften für Kohlenwasserstoffe auf, da die Versteifungsstrukturen ein Barriereschicht (beispielsweise eine EVOH-Schicht) der Behälterwand nicht beschädigen und deren Funktionalität nicht einschränken.

Das Merkmal, gemäß dem die Behälterwand derart zumindest abschnittsweise sandwichartig zwischen der ersten Versteifungsstruktur und der zweiten Versteifungsstruktur angeordnet ist, dass die erste Versteifungsstruktur und die zweite Versteifungsstruktur zumindest abschnittsweise überlappend angeordnet sind, ist äquivalent mit dem Merkmal, dass eine Flächennormale der Behälterwand in einem Überlappungsbereich mit der ersten Versteifungsstruktur und/oder mit der zweiten Versteifungsstruktur die erste Versteifungsstruktur und die zweite Versteifungsstruktur durchsetzt. Dies bedeutet, dass in Draufsicht auf die Behälterwand, also in einer zur Flächennormale der Behälterwand parallelen Blickrichtung die erste Versteifungsstruktur und die zweite Versteifungsstruktur überlappen. D.h., die Flächennormale der Behälterwand in dem Bereich der Behälterwand, der mit der ersten Versteifungsstruktur und mit der zweiten Versteifungsstruktur verbunden ist, durchsetzt sowohl die erste Versteifungsstruktur als auch die zweite Versteifungsstruktur.

Bei einer innenüberdruckbedingten Deformation der Behälterwand nimmt die zweite Versteifungsstruktur Zugkräfte und die erste Versteifungsstruktur Druckkräfte auf. Bei einer innenunterdruckbedingten Deformation der Behälterwand nimmt die erste Versteifungsstruktur Zugkräfte und die zweite Versteifungsstruktur Druckkräfte auf.

Der Betriebsflüssigkeitsbehälter ist vorzugsweise aus einem thermoplastischen Kunststoff gebildet. In dem Fall, dass der Betriebsflüssigkeitsbehälter als Kraftstoffbehälter ausgebildet ist, kann die Behälterwand / können die Behälterwände aus einem Materialschichtsystem umfassend einer Innenschicht in Form einer HDPE-Schicht, einer Haftvermittlerschicht in Form einer LDPE-Schicht, einer Barriereschicht in Form einer EVOH-Schicht, einer weiteren Haftvermittlerschicht in Form einer LDPE-Schicht und einer Außenschicht in Form einer weiteren HDPE-Schicht oder einer Recyklatschicht gebildet sein.

Die Faserverstärkung der ersten und zweiten Versteifungsstrukturen erfolgt mittels Verstärkungsfasern, die auch als Fasermaterial bezeichnet werden können. Das Fasermaterial weist vorzugsweise Glasfasern und/oder Kohlenstofffasern und/oder Polymerfasern und/oder Aramidfasern und/oder Naturfasern (beispielsweise Flachsfasern) und/oder ein anderes geeignetes Fasermaterial auf.

Die ersten und zweiten Versteifungsstrukturen weisen vorzugsweise eine thermoplastische oder eine duroplastische Matrix bzw. Matrixmaterial auf, in die das Fasermaterial eingebettet ist.

Die faserverstärkten Versteifungsstrukturen können Zugkräfte aufnehmen und können somit als zugfeste Versteifungsstrukturen bzw. Verstärkungsvorrichtungen bezeichnet werden. Vorzugsweise können die Versteifungsstrukturen auch Druckkräfte aufnehmen und können somit als zug- und/oder druckfeste Versteifungsstrukturen bzw. Verstärkungsvorrichtungen bezeichnet werden.

Selbstverständlich kann der erfindungsgemäße Betriebsflüssigkeitsbehälter auch mehrere erste faserverstärkte Versteifungsstrukturen und mehrere zweite faserverstärkte Versteifungsstrukturen aufweisen, wobei die ersten Versteifungsstrukturen mit der Innenfläche der Behälterwand und die zweiten Versteifungsstrukturen mit der Außenfläche der Behälterwand verbunden sind.

Die Verbindung der ersten Versteifungsstruktur bzw. der ersten Versteifungsstrukturen mit der Innenfläche der Behälterwand erfolgt vorzugsweise vollflächig, d.h., dass die gesamte der Innenfläche der Behälterwand gegenüberliegende Verbindungsfläche der ersten Versteifungsstruktur bzw. der ersten Versteifungsstrukturen mit der Innenfläche der Behälterwand verbunden ist. Diese Verbindung erfolgt vorzugsweise stoffschlüssig, beispielsweise mittels einer Verschweißung. Die Verbindung der zweiten Versteifungsstruktur bzw. der zweiten Versteifungsstrukturen mit der Außenfläche der Behälterwand erfolgt vorzugsweise vollflächig, d.h., dass die gesamte der Außenfläche der Behälterwand gegenüberliegende Verbindungsfläche der zweiten Versteifungsstruktur bzw. der zweiten Versteifungsstrukturen mit der Außenfläche der Behälterwand verbunden ist. Diese Verbindung erfolgt vorzugsweise stoffschlüssig, beispielsweise mittels einer Verschweißung.

Ferner ist es auch möglich, dass die Verbindung der ersten Versteifungsstruktur bzw. der ersten Versteifungsstrukturen mit der Innenfläche der Behälterwand vorzugsweise teilflächig erfolgt. Ferner ist es auch möglich, dass die Verbindung der zweiten Versteifungsstruktur bzw. der zweiten Versteifungsstrukturen mit der Außenfläche der Behälterwand vorzugsweise teilflächig erfolgt.

Vorzugsweise ist der Betriebsflüssigkeitsbehälter derart ausgebildet, dass die Behälterwand derartig sandwichartig zwischen der ersten Versteifungsstruktur und der zweiten Versteifungsstruktur angeordnet ist, dass in Draufsicht auf die Behälterwand die erste Versteifungsstruktur und die zweite Versteifungsstruktur zueinander fluchtend verlaufen.

Ein entsprechend ausgebildeter Betriebsflüssigkeitsbehälter weist eine nochmals erhöhte Steifigkeit auf, so dass dieser erhöhten Überdrücken und Unterdrücken standhalten kann und bei Überdruckbeaufschlagung und Unterdruckbeaufschlagung geringere Deformationen aufweist. Diese Vorteile werden trotz eines geringen Gewichts des Betriebsflüssigkeitsbehälters erreicht.

Wenn die Behälterwand innerhalb einer Ebene angeordnet ist, die durch eine x-Achse und eine zu dieser senkrechten y-Achse aufgespannt ist, dann ist das Merkmal, wonach in Draufsicht auf die Behälterwand die erste Versteifungsstruktur und die zweite Versteifungsstruktur zueinander fluchtend verlaufen, gleichbedeutend mit dem Merkmal, dass die erste Versteifungsstruktur in x-Richtung und in y-Richtung die gleiche Ausdehnung aufweist wie die zweite Versteifungsstruktur.

Folglich verlaufen die Begrenzungskanten der ersten Versteifungsstruktur und der zweiten Versteifungsstruktur fluchtend zueinander.

Weiter vorzugsweise ist der Betriebsflüssigkeitsbehälter derart ausgebildet, dass die erste Versteifungsstruktur als faserverstärktes zugfestes erstes Band ausgebildet ist, und/oder dass die zweite Versteifungsstruktur als faserverstärktes zugfestes zweites Band ausgebildet ist.

Vorzugsweise ist das erste Band als zug- und druckfestes Band ausgebildet, so dass mittels des ersten Bandes sowohl Zugkräfte als auch Druckkräfte übertragbar sind. Vorzugsweise ist das zweite Band als zug- und druckfestes Band ausgebildet, so dass mittels des zweiten Bandes sowohl Zugkräfte als auch Druckkräfte übertragbar sind.

Ein entsprechend ausgebildeter Betriebsflüssigkeitsbehälter kann so auf eine besonders einfache Art und Weise verstärkt bzw. versteift werden, so dass die durch die Geometrie des Betriebsflüssigkeitsbehälters bedingten Deformationseigenschaften gezielt verbessert werden können. Denn die Bänder können gezielt in Bereichen des Betriebsflüssigkeitsbehälters mit der Innenfläche und der Außenfläche der Behälterwand / der Behälterwände verbunden werden, die bei Überdruckbeaufschlagung und/oder bei Unterdruckbeaufschlagung einer großen Deformation unterworfen wären, wären diese Bereiche nicht mit den Bändern, die auch als Versteifungsbänder oder Verstärkungsbänder bezeichnet werden können, verstärkt.

Das faserverstärkte zugfeste und/oder druckfeste Band kann eine Materialmatrix aus einem thermoplastischen oder duroplastischen Kunststoff aufweisen, in dem das Fasermaterial in Form von Glasfasern und/oder Kohlenstofffasern und/oder Polymerfasern und/oder Aramidfasern und/oder Naturfasern eingebettet ist.

Vorzugsweise ist eine Ausrichtung von Verstärkungsfasern des ersten Bandes parallel zu einer Längserstreckungsrichtung des ersten Bandes. Weiter vorzugsweise ist eine Ausrichtung von Verstärkungsfasern des zweiten Bandes parallel zu einer Längserstreckungsrichtung des zweiten Bandes.

Die parallele Ausrichtung der Verstärkungsfasern zu der Längserstreckungsrichtung des Bandes bedeutet eine im Wesentlichen parallele Ausrichtung der Verstärkungsfasern zu der Längserstreckungsrichtung des Bandes.

Bei den Verstärkungsfasern kann es sich um Glasfasern und/oder Kohlenstofffasern und/oder Polymerfasern und/oder Aramidfasern und/oder Naturfasern und/oder andere geeignete Verstärkungsfasern handeln.

Gemäß einer weiteren vorteilhaften Ausgestaltung ist der Betriebsflüssigkeitsbehälter derart ausgebildet, dass die erste Versteifungsstruktur als erstes Organoblech ausgebildet ist, und/oder dass die zweite Versteifungsstruktur als zweites Organoblech ausgebildet ist.

Ein entsprechend ausgebildeter Betriebsflüssigkeitsbehälter bietet den Vorteil, dass die jeweiligen als Organobleche ausgebildeten Versteifungsstrukturen multidirektionale Zug- und/oder Druckkräfte verbessert aufnehmen können. Denn die Verstärkungsfasern sind in den jeweiligen Organoblechen multidirektional angeordnet. Vorzugsweise sind die Verstärkungsfasern in einem Organoblech senkrecht zueinander angeordnet.

Organobleche sind Faserverbundwerkstoffe und daher Faser-Matrix-Halbzeuge. Sie bestehen aus einem Fasergewebe oder einem Fasergelege, die in eine üblicherweise thermoplastische Kunststoffmatrix eingebettet sind. Häufig verwendete Faserwerkstoffe sind Glas, Aramid und Kohlenstoff (Carbon). Bei Geweben und Gelegen können die Fasern auch rechtwinklig zueinander verlaufen. Weiter vorzugsweise ist der Betriebsflüssigkeitsbehälter derart ausgebildet, dass die erste Versteifungsstruktur an der Innenfläche der Behälterwand an zwei zueinander beabstandeten Befestigungsbereichen befestigt ist, und/oder dass die zweite Versteifungsstruktur an der Außenfläche der Behälterwand an zwei zueinander beabstandeten Befestigungsbereichen befestigt ist.

Ein entsprechend ausgebildeter Betriebsflüssigkeitsbehälter ist besonders einfach und schnell herzustellen, denn die jeweiligen Versteifungsstrukturen müssen lediglich an zwei zueinander beabstandeten Bereichen bzw. Ankerpunkten mit der Behälterwand verbunden werden. Die Versteifungsstrukturen können weiterhin durch Deformation der Behälterwand bedingte Zugkräfte aufnehmen und so einer Deformation der Behälterwand entgegenwirken.

Wenn die ersten und zweiten Versteifungsstrukturen als erste und zweite zugfeste und faserverstärkte Bänder ausgebildet sind, verlaufen die Verstärkungsfasern der Bänder vorzugsweise in einer Erstreckungsrichtung einer Verbindungslinie der zwei zueinander beabstandeten Befestigungsbereiche.

Selbstverständlich ist es auch möglich, dass die erste Versteifungsstruktur an der Innenfläche der Behälterwand auch an mehr als zwei zueinander beabstandeten Befestigungsbereichen befestigt ist, und/oder dass die zweite Versteifungsstruktur an der Außenfläche der Behälterwand auch an mehr als zwei zueinander beabstandeten Befestigungsbereichen befestigt ist.

Vorzugsweise ist der Betriebsflüssigkeitsbehälter derart ausgebildet, dass die erste Versteifungsstruktur an der Innenfläche der Behälterwand entlang einer Verbindungslinie verbunden ist, die zumindest eine Erstreckungskomponente aufweist, die senkrecht zu einer Faserrichtung von Verstärkungsfasern innerhalb der ersten Versteifungsstruktur verläuft. Weiter vorzugsweise ist der Betriebsflüssigkeitsbehälter derart ausgebildet, dass die zweite Versteifungsstruktur an der Außenfläche der Behälterwand entlang einer Verbindungslinie verbunden ist, die zumindest eine Erstreckungskomponente aufweist, die senkrecht zu einer Faserrichtung von Verstärkungsfasern innerhalb der zweiten Versteifungsstruktur verläuft.

Beispielsweise können die Versteifungsstrukturen mittels einer Zickzacklinie mit der Behälterwand verbunden sein.

Vorzugsweise ist der Betriebsflüssigkeitsbehälter derart ausgebildet, dass die erste Versteifungsstruktur innerhalb des Betriebsflüssigkeitsbehälters umlaufend angeordnet ist, und/oder dass die zweite Versteifungsstruktur außerhalb des Betriebsflüssigkeitsbehälters umlaufend angeordnet ist.

Der entsprechend ausgebildete Betriebsflüssigkeitsbehälter weist eine nochmals erhöhte Steifigkeit auf, so dass dieser erhöhten Überdrücken und Unterdrücken standhalten kann und bei Überdruckbeaufschlagung und Unterdruckbeaufschlagung geringere Deformationen aufweist.

Gemäß einer weiteren vorteilhaften Ausgestaltung weist der Betriebsflüssigkeitsbehälter zumindest zwei erste faserverstärkte Versteifungsstrukturen auf, die jeweils mit der dem Betriebsflüssigkeitsbehälterinnenraum zugewandten Innenfläche der Behälterwand verbunden sind, wobei die zwei ersten Versteifungsstrukturen derart gekreuzt zueinander angeordnet sind, dass deren Verstärkungsfasern winkelig, vorzugsweise senkrecht zueinander verlaufen. Vorzugsweise sind die zumindest zwei ersten Versteifungsstrukturen in einem Kontaktbereich, in dem die zwei ersten Versteifungsstrukturen einander überlappen, miteinander verbunden.

Weiter vorzugsweise weist der Betriebsflüssigkeitsbehälter zumindest zwei zweite faserverstärkte Versteifungsstrukturen auf, die jeweils mit der dem Betriebsflüssigkeitsbehälterinnenraum abgewandten Außenfläche der Behälterwand verbunden sind, wobei die zwei zweiten Versteifungsstrukturen derart gekreuzt zueinander angeordnet sind, dass deren Verstärkungsfasern winkelig, vorzugsweise senkrecht zueinander verlaufen. Vorzugsweise sind die zumindest zwei zweiten Versteifungsstrukturen in einem Kontaktbereich, in dem die zwei zweiten Versteifungsstrukturen einander überlappen, miteinander verbunden.

Die zwei zuletzt beschriebenen Ausführungen des Betriebsflüssigkeitsbehälters weisen nochmals erhöhte Steifigkeiten auf, so dass diese erhöhten Überdrücken und Unterdrücken standhalten können und bei Überdruckbeaufschlagung und Unterdruckbeaufschlagung geringere Deformationen aufweisen. Denn die Versteifungsstrukturen können Zug- und/oder Druckkräfte mit unterschiedlichen, vorzugsweisen senkrechten Kraftkomponenten aufnehmen.

Selbstverständlich können die ersten Versteifungsstrukturen und die zweiten Versteifungsstrukturen in Draufsicht auf die Behälterwand / auf die jeweiligen Behälterwände, mit denen sie verbunden sind, überlappend, vorzugsweise fluchtend zueinander angeordnet sein.

Vorzugsweise ist der Betriebsflüssigkeitsbehälter derart ausgebildet, dass die erste Versteifungsstruktur und/oder die zweite Versteifungsstruktur mit der Behälterwand stoffschlüssig verbunden ist/sind.

Beispielsweise ist eine einen thermoplastischen Kunststoff aufweisende Versteifungsstruktur mit einer aus einem schweißtechnisch kompatiblen thermoplastischen Kunststoff stoffschlüssig verbindbar. Beispielsweise können die Versteifungsstrukturen ein HDPE oder LDPE umfassendes oder aus HPDE oder LDPE bestehendes Matrixmaterial aufweisen, dass mit einer HDPE umfassenden oder aus HDPE bestehenden Behälterwand verschweißbar ist.

Vorzugsweise lassen sich die Versteifungsstrukturen mit der Behälterwand / den Behälterwänden in der sogenannten ersten Hitze verbinden, wobei die Versteifungsstrukturen an die noch warmplastische Behälterwand angelegt und gegebenenfalls an diese angedrückt werden, so dass die Versteifungsstrukturen mit der Behälterwand verschweißen.

Es ist jedoch auch möglich, dass die Versteifungsstrukturen und/oder die Behälterwand nach Auskühlen des Betriebsflüssigkeitsbehälters erhitzt und anschließend an die Behälterwand angelegt und gegebenenfalls an diese angedrückt werden.

Eine stoffschlüssige Verbindung der Versteifungsstrukturen mit der Behälterwand / den Behälterwänden ist ferner mittels einer Verklebung der Versteifungsstrukturen mit der Behälterwand / den Behälterwänden ermöglicht.

Gemäß einer weiteren möglichen Ausgestaltung des Betriebsflüssigkeitsbehälters ist die erste Versteifungsstruktur mit der Behälterwand mittels einer zwischen der ersten Versteifungsstruktur und der Innenfläche der Behälterwand angeordneten Haftvermittlerschicht verbunden. Weiter vorzugsweise ist die zweite Versteifungsstruktur mit der Behälterwand mittels einer zwischen der zweiten Versteifungsstruktur und der Außenfläche der Behälterwand angeordneten Haftvermittlerschicht verbunden.

Der entsprechend ausgebildete Betriebsflüssigkeitsbehälter bietet den Vorteil, dass die Materialen der Behälterwand und der Versteifungsstrukturen (deren Matrixmaterial) nicht notwendigerweise schweißtechnisch miteinander kompatibel sein müssen. Daher besteht ein größerer Freiheitsgrad bei der Auswahl des Matrixmaterials für die Versteifungsstrukturen.

Gemäß einer weiteren vorteilhaften Ausgestaltung des Betriebsflüssigkeitsbehälters ist dieser derart ausgestaltet, dass die erste Versteifungsstruktur mit der Behälterwand mittels einer die erste Versteifungsstruktur durchsetzenden Nietverbindung verbunden ist. Weiter vorzugsweise ist die zweite Versteifungsstruktur mit der Behälterwand mittels einer die zweite Versteifungsstruktur durchsetzenden Nietverbindung verbunden.

Der entsprechend ausgebildete Betriebsflüssigkeitsbehälter bietet den Vorteil, dass die Materialen der Behälterwand und der Versteifungsstrukturen (deren Matrixmaterial) nicht notwendigerweise schweißtechnisch miteinander kompatibel sein müssen. Daher besteht ein größerer Freiheitsgrad bei der Auswahl des Matrixmaterials für die Versteifungsstrukturen. Zur Nietverbindung der Versteifungsstruktur mit der Behälterwand weist die Versteifungsstruktur vorzugsweise eine Durchgangsöffnung auf, durch die ein Nietstift hindurchgeführt ist, wobei der Nietstift aus einem Material gebildet ist, das mit dem Material der Behälterwand, insbesondere mit den Außenschichten der Behälterwand, verschweißbar ist.

Gemäß einer weiteren vorteilhaften Ausgestaltung des Betriebsflüssigkeitsbehälters weist die erste Versteifungsstruktur zumindest einen der Innenfläche der Behälterwand zugewandten ersten Verbindungsstift mit einem ersten Hinterschnitt auf, wobei der erste Verbindungsstift in die Behälterwand eingedrungen ist, so dass der erste Hinterschnitt in die Behälterwand eingetaucht ist und die erste Versteifungsstruktur mit der Behälterwand formschlüssig verbunden ist. Weiter vorzugsweise weist die zweite Versteifungsstruktur zumindest einen der Außenfläche der Behälterwand zugewandten zweiten Verbindungsstift mit einem zweiten Hinterschnitt auf, wobei der zweite Verbindungsstift in die Behälterwand eingedrungen ist, so dass der zweite Hinterschnitt in die Behälterwand eingetaucht ist und die zweite Versteifungsstruktur mit der Behälterwand formschlüssig verbunden ist.

Auch der entsprechend ausgebildete Betriebsflüssigkeitsbehälter bietet den Vorteil, dass die Materialien der Behälterwand und der Versteifungsstrukturen schweißtechnisch nicht miteinander kompatibel sein müssen. Ferner ist eine zuverlässige Verbindung der Versteifungsstrukturen an der Behälterwand gewährleistet.

Die Versteifungsstrukturen weisen vorzugsweise eine Vielzahl von Verbindungsstiften mit Hinterschnitten auf, die jeweils im verbundenen Zustand mit der Behälterwand in diese eingetaucht sind. Beispielsweise können die Verbindungsstifte nach Art einer Klettverbindung hakenförmig ausgebildet sein.

Beispielsweise kann das Matrixmaterial der Versteifungsstrukturen ein duroplastischer Kunststoff sein oder einen solchen umfassen, wohingegen die Behälterwand, insbesondere die Außenschichten der Behälterwand, aus einem thermoplastischen Kunststoff gebildet sind.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine perspektivische Darstellung der Außenseite eines erfindungsgemäßen Betriebsflüssigkeitsbehälters;
- Figur 2:: eine Querschnittsdarstellung einer Behälterwand des erfindungsgemäßen Betriebsflüssigkeitsbehälters;
- Figur 3A:: eine Querschnittsdarstellung einer Behälterwand einer alternativen Ausführungsform des erfindungsgemäßen Betriebsflüssigkeitsbehälters;
- Figur 3B:: eine schematische perspektivische Darstellung der in Figur 3A dargestellten Behälterwand;
- Figur 4:: eine Querschnittsdarstellung einer Behälterwand einer weiteren alternativen Ausführungsform des erfindungsgemäßen Betriebsflüssigkeitsbehälters;
- Figur 5A:: eine schematische Querschnittsdarstellung eines erfindungsgemäßen Betriebsflüssigkeitsbehälters;
- Figur 5B:: eine Detailansicht des in Figur 5A umkreisen Bereichs; und
- Figur 6:: eine Querschnittsdarstellung einer Behälterwand eines Betriebsflüssigkeitsbehälters gemäß einer weiteren Ausführungsform der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

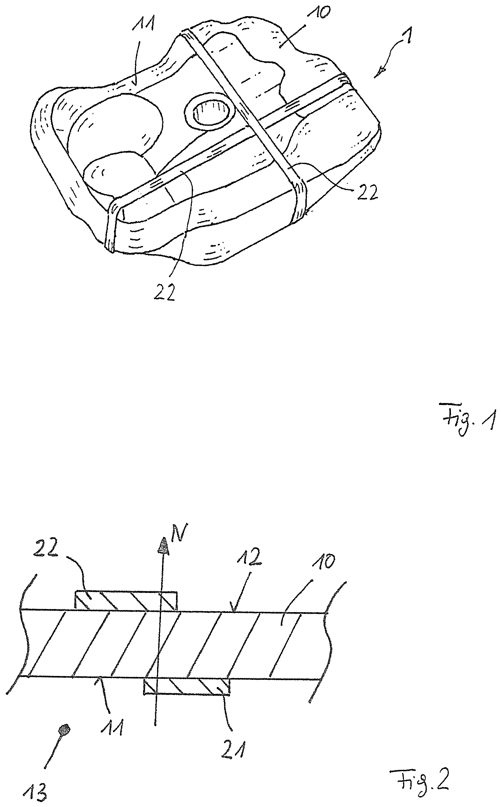

In Figur 1 ist in schematischer perspektivische Darstellung ein erfindungsgemäßer Betriebsflüssigkeitsbehälter 1 dargestellt. Der Betriebsflüssigkeitsbehälter 1 weist eine einen Betriebsflüssigkeitsbehälterinnenraum 13 begrenzende Behälterwand 10 auf. Es ist ersichtlich, dass der Betriebsflüssigkeitsbehälter 1 in dem dargestellten Ausführungsbeispiel zwei zweite Versteifungsstrukturen 22 aufweist, die in dem dargestellten Ausführungsbeispiel als zweite zugfeste Bänder 22 ausgebildet sind. Die zweiten zugfeste Bänder 22 sind dabei mit einer dem Betriebsflüssigkeitsbehälterinnenraum 13 abgewandten Außenfläche 12 der Behälterwand 10 verbunden. Aus Figur 1 ist ferner ersichtlich, dass die zweiten zugfesten Bänder 22 gekreuzt zueinander angeordnet sind, sodass in den Figuren nicht dargestellte Verstärkungsfasern der zugfesten Bänder 22 senkrecht zueinander verlaufen. Denn die Verstärkungsfasern der zweiten zugfesten Bänder 22 verlaufen parallel zu der Längserstreckungsrichtung der zweiten zugfesten Bänder 22. Aus Figur 2 ist jedoch nicht ersichtlich, dass der Betriebsflüssigkeitsbehälter 1 ferner eine innerhalb des Betriebsflüssigkeitsbehälters 1 angeordnete erste Versteifungsstruktur 21 aufweist.

Aus Figur 2 ist eine schematische Querschnittsdarstellung einer Behälterwand 10 eines erfindungsgemäßen Betriebsflüssigkeitsbehälters 1 dargestellt. Es ist ersichtlich, dass der Betriebsflüssigkeitsbehälter 1 eine erste faserverstärkte Versteifungsstruktur 21 und eine zweite faserverstärkte Versteifungsstruktur 22 aufweist. Auch in dem in Figur 2 dargestellten Ausführungsbeispiel sind die Versteifungsstrukturen 21 als zugfeste Bänder 21, 22 ausgebildet. Die erste Versteifungsstruktur 21 ist mit einer dem Betriebsflüssigkeitsbehälterinnenraum 13 zugewandten Innenfläche 11 der Behälterwand 10 verbunden, und die zweite Versteifungsstruktur 22 ist mit einer dem Betriebsflüssigkeitsbehälterinnenraum 13 abgewandten Außenfläche 12 der Behälterwand 10 verbunden. Die Behälterwand 10 ist derart abschnittsweise sandwichartig zwischen der ersten Versteifungsstruktur 11 und der zweiten Versteifungsstruktur 12 angeordnet, dass die erste Versteifungsstruktur 11 und die zweite Versteifungsstruktur 12 zumindest abschnittsweise überlappend angeordnet sind.

Das Merkmal, gemäß dem die Behälterwand 10 derart zumindest abschnittsweise sandwichartig zwischen der ersten Versteifungsstruktur 21 und der zweiten Versteifungsstruktur 22 angeordnet ist, sodass die erste Versteifungsstruktur 21 und die zweite Versteifungsstruktur 22 zumindest abschnittsweise überlappend angeordnet sind, ist äquivalent mit dem Merkmal, dass eine Flächennormale N der Behälterwand 10 in einem Überlappungsbereich mit der ersten Versteifungsstruktur 21 und/oder mit der zweiten Versteifungsstruktur 22 die erste Versteifungsstruktur 21 und die zweite Versteifungsstruktur 22 durchsetzt. Aus Figur 2 ist ersichtlich, dass bei einer zu der Flächennormale N parallelen Blickrichtung die erste Versteifungsstruktur 21 und die zweite Versteifungsstruktur 22 überlappen, d.h., dass die Flächennormale N der Behälterwand 10 sowohl die erste Versteifungsstruktur 21 als auch die zweite Versteifungsstruktur 22 durchsetzt.

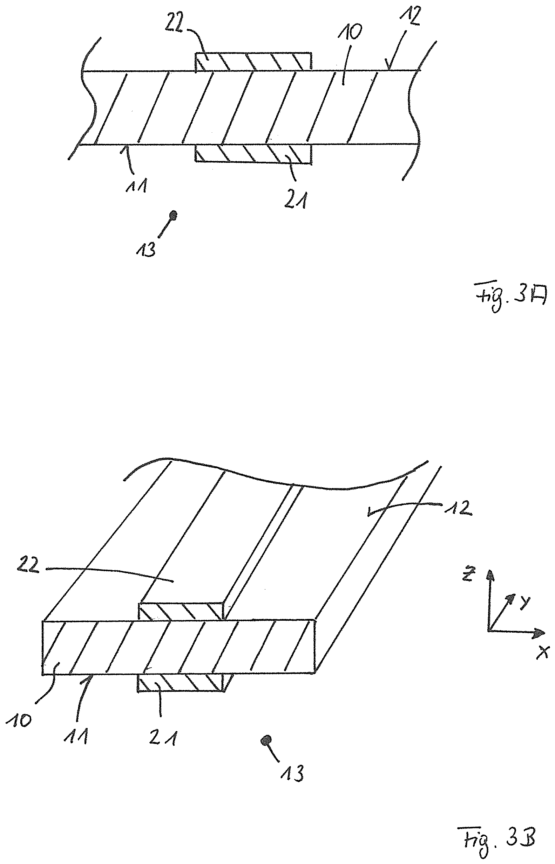

Aus Figur 3A ist eine schematische Querschnittsdarstellung einer Behälterwand 10 eines Betriebsflüssigkeitsbehälters 1 in abgewandelter Form dargestellt. In Figur 3B ist die in Figur 3A dargestellte Behälterwand 10 in schematischer perspektivischer Darstellung gezeigt. Aus den Figuren 3A und 3B ist ersichtlich, dass die Behälterwand 10 derartig sandwichartig zwischen der ersten Versteifungsstruktur 11 und der zweiten Versteifungsstruktur 12 angeordnet ist, dass in Draufsicht auf die Behälterwand 10 die erste Versteifungsstruktur 21 und die zweite Versteifungsstruktur 22 zueinander fluchtend verlaufen. Die jeweiligen Begrenzungskanten der ersten Versteifungsstruktur 21 und der zweiten Versteifungsstruktur 22 sind bei Draufsicht folglich ebenfalls fluchtend zueinander auf die Betriebsflüssigkeitsbehälterwand 10 ausgerichtet.

Aus Figur 3B ist ersichtlich, dass die Behälterwand 10 innerhalb einer von einer x-Achse und einer y-Achse aufgespannten Ebene angeordnet ist. Demnach ist das Merkmal, wonach in Draufsicht auf die Behälterwand 10 die erste Versteifungsstruktur 21 und die zweite Versteifungsstruktur 22 zueinander fluchtend verlaufen, gleichbedeutend mit dem Merkmal, dass die erste Versteifungsstruktur in x-Richtung und in y-Richtung die gleiche Ausdehnung aufweist wie die zweite Versteifungsstruktur 22.

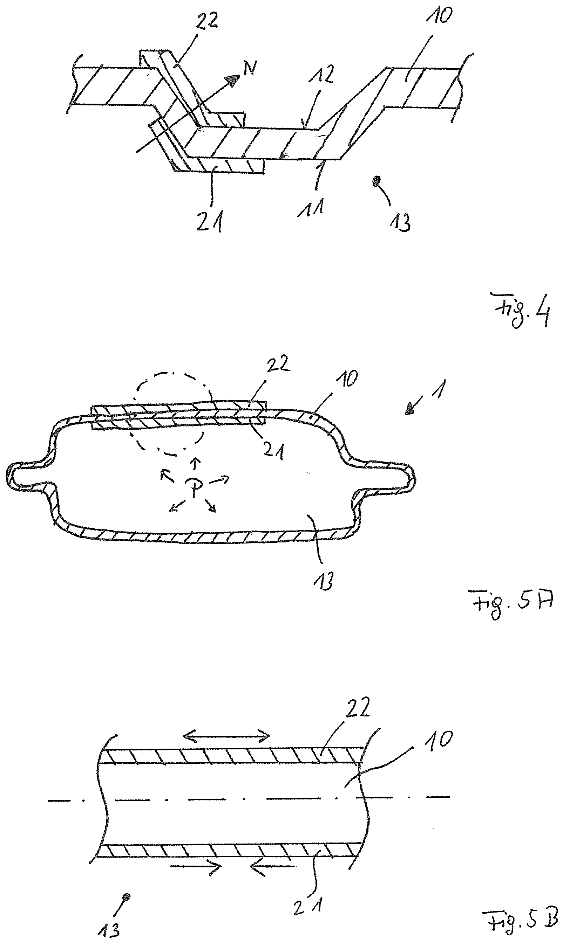

Aus Figur 4 ist ein Querschnitt durch eine Behälterwand 10 eines Betriebsflüssigkeitsbehälters 1 gemäß einer weiteren Ausführungsform dargestellt. Es ist ersichtlich, dass der Betriebsflüssigkeitsbehälter 1 eine Mulde aufweist. Die erste Versteifungsstruktur 21 ist mit der Innenfläche 11 der Behälterwand 10 im Bereich der Mulde verbunden, und die zweite Versteifungsstruktur 22 ist mit der Außenfläche 12 der Behälterwand 10 sowohl im Bereich der Mulde als auch in einem Bereich außerhalb der Mulde verbunden. Es ist ersichtlich, dass eine Flächennormale N der Behälterwand 10 im Bereich der Seitenflanken der Mulde sowohl die erste Versteifungsstruktur 21 als auch die zweite Versteifungsstruktur 22 durchsetzt.

In Figur 5A ist ein erfindungsgemäßer Betriebsflüssigkeitsbehälter 1 im Querschnitt schematisch dargestellt. Es ist angedeutet, dass der Betriebsflüssigkeitsbehälter 1 mit einem Innenüberdruck P beaufschlagt ist. Die in Figur 5A oben dargestellte Behälterwand 10 ist mit einer ersten Versteifungsstruktur 21 und einer zweiten Versteifungsstruktur 22 verbunden. Der Kontaktbereich der ersten Versteifungsstruktur 21 mit der Behälterwand 10 und der zweiten Versteifungsstruktur 22 mit der Behälterwand 10 ist in Figur 5B vergrößert dargestellt.

Aus Figur 5B ist ersichtlich, dass bei einer Innendruckbeaufschlagung, d.h. bei einem Überdruck innerhalb des Betriebsflüssigkeitsbehälterinnenraums 13 im Vergleich zu dem Umgebungsdruck, die zweite Versteifungsstruktur 22 auf Zug belastet wird (siehe voneinander weg gerichtete Pfeilspitzen im Bereich der zweiten Versteifungsstruktur 22) und die erste Versteifungsstruktur 21 auf Druck belastet wird (siehe aufeinander zu gerichtete Pfeile im Bereich der ersten Versteifungsstruktur 21) .

Wenn andererseits der Betriebsflüssigkeitsbehälterinnenraum 13 einen geringeren Innendruck aufweist als der Umgebungsdruck des Betriebsflüssigkeitsbehälters 1 würde die zweite Versteifungsstruktur 22 auf Druck belastet werden, wohingegen die erste Versteifungsstruktur 21 auf Zug belastet werden würde.

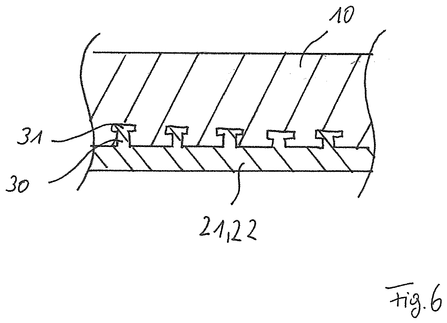

In Figur 6 in schematischer Art und Weise ein Schnitt durch eine Betriebsflüssigkeitsbehälterwand 10 eines Betriebsflüssigkeitsbehälters 1 gemäß einer weiteren Ausführungsform dargestellt. Es ist ersichtlich, dass die erste Versteifungsstruktur 21 und/oder die zweite Versteifungsstruktur 22 eine Vielzahl von Verbindungsstiften 30 aufweist/aufweisen, die jeweils einen Hinterschnitt 31 aufweisen. Die jeweiligen Verbindungsstifte 30 sind dabei in die Behälterwand 10 eingedrungen, sodass die jeweiligen Hinterschnitte 31 in die Behälterwand 10 eingetaucht sind und die Versteifungsstruktur 21, 22 mit der Behälterwand 10 formschlüssig verbunden ist.

### Bezugszeichenliste

- 1: Betriebsflüssigkeitsbehälter / Kraftstoffbehälter
- 10: Behälterwand
- 11: Innenfläche (der Behälterwand)
- 12: Außenfläche (der Behälterwand)
- 13: Betriebsflüssigkeitsbehälterinnenraum
- 21: erste Versteifungsstruktur / erstes zugfestes Band
- 22: zweite Versteifungsstruktur / zweites zugfestes Band
- 30: Verbindungsstift
- 31: Hinterschnitt (des Verbindungsstifts)

- N: Normalenvektor / Normalenrichtung (der Behälterwand)
- P: Innendruck (im Betriebsflüssigkeitsbehälter)

## Patentansprüche

1. Betriebsflüssigkeitsbehälter (1) für ein Kraftfahrzeug mit einer einen Betriebsflüssigkeitsbehälterinnenraum (13) begrenzende Behälterwand (10), mit folgende Merkmale:
- der Betriebsflüssigkeitsbehälter (1) weist eine erste faserverstärkte Versteifungsstruktur (21) und eine zweite faserverstärkte Versteifungsstruktur (22) auf;
- die erste Versteifungsstruktur (21) ist mit einer dem Betriebsflüssigkeitsbehälterinnenraum (13) zugewandten Innenfläche (11) der Behälterwand (10) verbunden, und die zweite Versteifungsstruktur (22) ist mit einer dem Betriebsflüssigkeitsbehälterinnenraum (13) abgewandten Außenfläche (12) der Behälterwand (10) verbunden; und
- die Behälterwand (10) ist derart zumindest abschnittsweise sandwichartig zwischen der ersten Versteifungsstruktur (11) und der zweiten Versteifungsstruktur (12) angeordnet, dass die erste Versteifungsstruktur (11) und die zweite Versteifungsstruktur (12) zumindest abschnittsweise überlappend angeordnet sind.

2. Betriebsflüssigkeitsbehälter (1) nach Anspruch 1, **dadurch gekennzeichnet, dass** die Behälterwand (10) derartig sandwichartig zwischen der ersten Versteifungsstruktur (11) und der zweiten Versteifungsstruktur (12) angeordnet ist, dass in Draufsicht auf die Behälterwand (10) die erste Versteifungsstruktur (21) und die zweite Versteifungsstruktur (22) zueinander fluchtend verlaufen.

3. Betriebsflüssigkeitsbehälter (1) nach einem der vorhergehenden Ansprüche, **dadurch gekennzeichnet, dass** die erste Versteifungsstruktur (21) als faserverstärktes zugfestes erstes Band (21) ausgebildet ist, und/oder dass die zweite Versteifungsstruktur (22) als faserverstärktes zugfestes zweites Band (22) ausgebildet ist.

4. Betriebsflüssigkeitsbehälter (1) nach zumindest einem der Ansprüche 1 bis 3, **dadurch gekennzeichnet, dass** die erste Versteifungsstruktur (21) als erstes Organoblech ausgebildet ist, und/oder dass die zweite Versteifungsstruktur (22) als zweites Organoblech ausgebildet ist.

5. Betriebsflüssigkeitsbehälter (1) nach einem der vorhergehenden Ansprüche, **gekennzeichnet durch** die folgenden Merkmale:
- die erste Versteifungsstruktur (21) ist an der Innenfläche (11) der Behälterwand (10) an zwei zueinander beabstandeten Befestigungsbereichen befestigt; und/oder
- die zweite Versteifungsstruktur (22) ist an der Außenfläche (12) der Behälterwand (10) an zwei zueinander beabstandeten Befestigungsbereichen befestigt.

6. Betriebsflüssigkeitsbehälter (1) nach einem der vorhergehenden Ansprüche, **gekennzeichnet durch** die folgenden Merkmale:
- die erste Versteifungsstruktur (21) ist an der Innenfläche (11) der Behälterwand (10) entlang einer Verbindungslinie verbunden, die zumindest eine Erstreckungskomponente aufweist, die senkrecht zu einer Faserrichtung von Verstärkungsfasern innerhalb der ersten Versteifungsstruktur (21) verläuft; und/oder
- die zweite Versteifungsstruktur (22) ist an der Außenfläche (12) der Behälterwand (10) entlang einer Verbindungslinie verbunden, die zumindest eine Erstreckungskomponente aufweist, die senkrecht zu einer Faserrichtung von Verstärkungsfasern innerhalb der zweiten Versteifungsstruktur (22) verläuft.

7. Betriebsflüssigkeitsbehälter (1) nach einem der vorhergehenden Ansprüche, **gekennzeichnet durch** die folgenden Merkmale:
- die erste Versteifungsstruktur (21) ist innerhalb des Betriebsflüssigkeitsbehälters (1) umlaufend angeordnet; und/oder
- die zweite Versteifungsstruktur (22) ist außerhalb des Betriebsflüssigkeitsbehälters (1) umlaufend angeordnet.

8. Betriebsflüssigkeitsbehälter (1) nach einem der vorhergehenden Ansprüchen, **gekennzeichnet durch** die folgenden Merkmale:
- der Betriebsflüssigkeitsbehälter (1) weist zumindest zwei erste faserverstärkte Versteifungsstrukturen (21) auf, die jeweils mit der dem Betriebsflüssigkeitsbehälterinnenraum (13) zugewandten Innenfläche (11) der Behälterwand (10) verbunden sind; und
- die zwei ersten Versteifungsstrukturen (21) sind derart gekreuzt zueinander angeordnet, dass deren Verstärkungsfasern winkelig, vorzugsweise senkrecht zueinander verlaufen.

9. Betriebsflüssigkeitsbehälter (1) nach einem der vorhergehenden Ansprüchen, **gekennzeichnet durch** die folgenden Merkmale:
- der Betriebsflüssigkeitsbehälter (1) weist zumindest zwei zweite faserverstärkte Versteifungsstrukturen (22) auf, die jeweils mit der dem Betriebsflüssigkeitsbehälterinnenraum (13) abgewandten Außenfläche (12) der Behälterwand (10) verbunden sind; und
- die zwei zweiten Versteifungsstrukturen (22) sind derart gekreuzt zueinander angeordnet, dass deren Verstärkungsfasern winkelig, vorzugsweise senkrecht zueinander verlaufen.

10. Betriebsflüssigkeitsbehälter (1) nach einem der vorhergehenden Ansprüchen, **dadurch gekennzeichnet, dass** die erste Versteifungsstruktur (21) und/oder die zweite Versteifungsstruktur (22) mit der Behälterwand (10) stoffschlüssig verbunden ist.

11. Betriebsflüssigkeitsbehälter (1) nach einem der vorhergehenden Ansprüchen, **dadurch gekennzeichnet,**
- **dass** die erste Versteifungsstruktur (21) mit der Behälterwand (10) mittels einer zwischen der ersten Versteifungsstruktur (21) und der Innenfläche (11) der Behälterwand (10) angeordneten Haftvermittlerschicht verbunden ist, und/oder
- **dass** die zweite Versteifungsstruktur (22) mit der Behälterwand (10) mittels einer zwischen der zweiten Versteifungsstruktur (22) und der Außenfläche (12) der Behälterwand (10) angeordneten Haftvermittlerschicht verbunden ist.

12. Betriebsflüssigkeitsbehälter (1) nach einem der vorhergehenden Ansprüche, **dadurch gekennzeichnet,**
- **dass** die erste Versteifungsstruktur (21) mit der Behälterwand (10) mittels einer die erste Versteifungsstruktur (21) durchsetzenden Nietverbindung verbunden ist, und/oder
- **dass** die zweite Versteifungsstruktur (22) mit der Behälterwand (10) mittels einer die zweite Versteifungsstruktur (22) durchsetzenden Nietverbindung verbunden ist.

13. Betriebsflüssigkeitsbehälter (1) nach einem der vorhergehenden Ansprüche, **dadurch gekennzeichnet, dass**
- die erste Versteifungsstruktur (21) zumindest einen der Innenfläche (11) der Behälterwand (10) zugewandten Verbindungsstift (30) mit einem Hinterschnitt (31) aufweist, wobei der Verbindungsstift (30) in die Behälterwand (10) eingedrungen ist, so dass der Hinterschnitt (31) in die Behälterwand (10) eingetaucht ist und die erste Versteifungsstruktur (21) mit der Behälterwand (10) formschlüssig verbunden ist, und/oder
- die zweite Versteifungsstruktur (22) zumindest einen der Außenfläche (12) der Behälterwand (10) zugewandten Verbindungsstift (30) mit einem Hinterschnitt (31) aufweist, wobei der Verbindungsstift (30) in die Behälterwand (10) eingedrungen ist, so dass der Hinterschnitt (31) in die Behälterwand (10) eingetaucht ist und die zweite Versteifungsstruktur (22) mit der Behälterwand (10) formschlüssig verbunden ist.

## Claims

1. An operating liquid tank (1) for a motor vehicle having a tank wall (10) that bounds an operating liquid tank interior (13), having the following features:
- the operating liquid tank (1) has a first fiber-reinforced stiffening structure (21) and a second fiber-reinforced stiffening structure (22);
- the first stiffening structure (21) is bonded to an inner face (11) of the tank wall (10) that faces the operating liquid tank interior (13), and the second stiffening structure (22) is bonded to an outer face (12) of the tank wall (10) that faces away from the operating liquid tank interior (13); and
- the tank wall (10), at least in sections, is in a sandwichlike arrangement between the first stiffening structure (21) and the second stiffening structure (22), in such a way that the first stiffening structure (21) and the second stiffening structure (22), at least in sections, are in an overlapping arrangement.

2. The operating liquid tank (1) as claimed in claim 1, **characterized in that** the tank wall (10) is in a sandwichlike arrangement between the first stiffening structure (21) and the second stiffening structure (22), in such a way that, in a top view of the tank wall (10), the first stiffening structure (21) and the second stiffening structure (22) run flush to one another.

3. The operating liquid tank (1) as claimed in either of the preceding claims, **characterized in that** the first stiffening structure (21) takes the form of a fiber-reinforced tensile first ribbon (21), and/or **in that** the second stiffening structure (22) takes the form of a fiber-reinforced tensile second ribbon (22).

4. The operating liquid tank (1) as claimed in at least one of claims 1 to 3, **characterized in that** the first stiffening structure (21) takes the form of a first organosheet, and/or **in that** the second stiffening structure (22) takes the form of a second organosheet.

5. The operating liquid tank (1) as claimed in any of the preceding claims, **characterized by** the following features:
- the first stiffening structure (21) is secured to two spaced-apart securing regions on the inner face (11) of the tank wall (10); and/or
- the second stiffening structure (22) is secured to two spaced-apart securing regions on the outer face (12) of the tank wall (10).

6. The operating liquid tank (1) as claimed in any of the preceding claims, **characterized by** the following features:
- the first stiffening structure (21) is bonded on the inner face (11) of the tank wall (10) along a bonding line having at least one extension component that runs at right angles to a fiber direction of reinforcing fibers within the first stiffening structure (21); and/or
- the second stiffening structure (22) is bonded on the outer face (12) of the tank wall (10) along a bonding line having at least one extension component that runs at right angles to a fiber direction of reinforcing fibers within the second stiffening structure (22).

7. The operating liquid tank (1) as claimed in any of the preceding claims, **characterized by** the following features:
- the first stiffening structure (21) is in a circumferential arrangement within the operating liquid tank (1); and/or
- the second stiffening structure (22) is in a circumferential arrangement outside the operating liquid tank (1).

8. The operating liquid tank (1) as claimed in any of the preceding claims, **characterized by** the following features:
- the operating liquid tank (1) has at least two first fiber-reinforced stiffening structures (21), each of which is bonded to the inner face (11) of the tank wall (10) that faces the operating liquid tank interior (13); and
- the two first stiffening structures (21) are in a crossed arrangement such that the reinforcing fibers thereof run at an angle, preferably at right angles, to one another.

9. The operating liquid tank (1) as claimed in any of the preceding claims, **characterized by** the following features:
- the operating liquid tank (1) has at least two second fiber-reinforced stiffening structures (22), each of which is bonded to the outer face (12) of the tank wall (10) that faces away from the operating liquid tank interior (13); and
- the two second stiffening structures (22) are in a crossed arrangement such that the reinforcing fibers thereof run at an angle, preferably at right angles, to one another.

10. The operating liquid tank (1) as claimed in any of the preceding claims, **characterized in that** the first stiffening structure (21) and/or the second stiffening structure (22) is cohesively bonded to the tank wall (10).

11. The operating liquid tank (1) as claimed in any of the preceding claims, **characterized in that**
- the first stiffening structure (21) is bonded to the tank wall (10) by means of an adhesion promoter layer disposed between the first stiffening structure (21) and the inner face (11) of the tank wall (10), and/or
- the second stiffening structure (22) is bonded to the tank wall (10) by means of an adhesion promoter layer disposed between the second stiffening structure (22) and the outer face (12) of the tank wall (10).

12. The operating liquid tank (1) as claimed in any of the preceding claims, **characterized in that**
- the first stiffening structure (21) is bonded to the tank wall (10) by means of a rivet bond that penetrates the first stiffening structure (21), and/or
- the second stiffening structure (22) is bonded to the tank wall (10) by means of a rivet bond that penetrates the second stiffening structure (22).

13. The operating liquid tank (1) as claimed in any of the preceding claims, **characterized in that**
- the first stiffening structure (21) has at least one bonding pin (30) that faces the inner face (11) of the tank wall (10) and has an undercut (31), where the bonding pin (30) has penetrated into the tank wall (10) such that the undercut (31) has merged into the tank wall (10) and the first stiffening structure (21) is bonded in a form-fitting manner to the tank wall (10), and/or
- the second stiffening structure (22) has at least one bonding pin (30) that faces the outer face (12) of the tank wall (10) and has an undercut (31), where the bonding pin (30) has penetrated into the tank wall (10) such that the undercut (31) has merged into the tank wall (10) and the second stiffening structure (22) is bonded in a form-fitting manner to the tank wall (10).

## Revendications

1. Récipient de liquide de fonctionnement (1) pour un véhicule automobile, comprenant une paroi de récipient (10) limitant un espace intérieur (13) de récipient de liquide de fonctionnement, présentant les caractéristiques suivantes :
- le récipient de liquide de fonctionnement (1) comprend une première structure de renforcement (21) renforcée par des fibres et une deuxième structure de renforcement (22) renforcée par des fibres ;
- la première structure de renforcement (21) est reliée à une surface intérieure (11) de la paroi de récipient (10) tournée vers l'espace intérieur (13) de récipient de liquide de fonctionnement, et la deuxième structure de renforcement (22) est reliée à une surface extérieure (12) de la paroi de récipient (10) opposée à l'espace intérieur (13) de récipient de liquide de fonctionnement ; et
- la paroi de récipient (10) est disposée au moins dans certaines parties en sandwich entre la première structure de renforcement (21) et la deuxième structure de renforcement (22), de telle sorte que la première structure de renforcement (21) et la deuxième structure de renforcement (22) soient disposées en chevauchement au moins dans certaines parties.

2. Récipient de liquide de fonctionnement (1) selon la revendication 1, **caractérisé en ce que** la paroi de récipient (10) est disposée en sandwich entre la première structure de renforcement (21) et la deuxième structure de renforcement (22), de telle sorte qu'en vue de dessus de la paroi de récipient (10), la première structure de renforcement (21) et la deuxième structure de renforcement (22) s'étendent en alignement l'une par rapport à l'autre.

3. Récipient de liquide de fonctionnement (1) selon l'une des revendications précédentes, **caractérisé en ce que** la première structure de renforcement (21) est réalisée sous forme de première bande (21) résistant à la traction et renforcée par des fibres, et/ou **en ce que** la deuxième structure de renforcement (22) est réalisée sous forme de deuxième bande (22) résistant à la traction et renforcée par des fibres.

4. Récipient de liquide de fonctionnement (1) selon au moins l'une des revendications 1 à 3, **caractérisé en ce que** la première structure de renforcement (21) est réalisée sous forme de première tôle organique, et/ou **en ce que** la deuxième structure de renforcement (22) est réalisée sous forme de deuxième tôle organique.

5. Récipient de liquide de fonctionnement (1) selon l'une des revendications précédentes, **caractérisé par** les caractéristiques suivantes :
- la première structure de renforcement (21) est fixée à la surface intérieure (11) de la paroi de récipient (10) au niveau de deux régions de fixation espacées l'une de l'autre ; et/ou
- la deuxième structure de renforcement (22) est fixée à la surface extérieure (12) de la paroi de récipient (10) au niveau de deux régions de fixation espacées l'une de l'autre.

6. Récipient de liquide de fonctionnement (1) selon l'une des revendications précédentes, **caractérisé par** les caractéristiques suivantes :
- la première structure de renforcement (21) est fixée à la surface intérieure (11) de la paroi de récipient (10) le long d'une ligne de liaison qui présente au moins une composante d'étendue qui s'étend perpendiculairement à une direction de fibres de renforcement à l'intérieur de la première structure de renforcement (21) ; et/ou
- la deuxième structure de renforcement (22) est fixée à la surface extérieure (12) de la paroi de récipient (10) le long d'une ligne de liaison qui présente au moins une composante d'étendue qui s'étend perpendiculairement à une direction de fibres de renforcement à l'intérieur de la deuxième structure de renforcement (22).

7. Récipient de liquide de fonctionnement (1) selon l'une des revendications précédentes, **caractérisé par** les caractéristiques suivantes :
- la première structure de renforcement (21) est disposée de manière périphérique à l'intérieur du récipient de liquide de fonctionnement (1) ; et/ou
- la deuxième structure de renforcement (22) est disposée de manière périphérique à l'extérieur du récipient de liquide de fonctionnement (1).

8. Récipient de liquide de fonctionnement (1) selon l'une des revendications précédentes, **caractérisé par** les caractéristiques suivantes :
- le récipient de liquide de fonctionnement (1) comprend au moins deux premières structures de renforcement (21) renforcées par des fibres, qui sont reliées respectivement à la surface intérieure (11) de la paroi de récipient (10) tournée vers l'espace intérieur (13) de récipient de liquide fonctionnement ; et
- les deux premières structures de renforcement (21) sont disposées de manière croisée l'une par rapport à l'autre, de telle sorte que leurs fibres de renforcement s'étendent de manière angulaire, de préférence perpendiculairement, les unes par rapport aux autres.

9. Récipient de liquide de fonctionnement (1) selon l'une des revendications précédentes, **caractérisé par** les caractéristiques suivantes :
- le récipient de liquide de fonctionnement (1) comprend au moins deux deuxièmes structures de renforcement (22) renforcées par des fibres, qui sont reliées respectivement à la surface extérieure (12) de la paroi de récipient (10) opposée à l'espace intérieur (13) de récipient de liquide fonctionnement ; et
- les deux deuxièmes structures de renforcement (22) sont disposées de manière croisée l'une par rapport à l'autre, de telle sorte que leurs fibres de renforcement s'étendent de manière angulaire, de préférence perpendiculairement, les unes par rapport aux autres.

10. Récipient de liquide de fonctionnement (1) selon l'une des revendications précédentes, **caractérisé en ce que** la première structure de renforcement (21) et/ou la deuxième structure de renforcement (22) sont reliées par liaison de matière à la paroi de récipient (10).

11. Récipient de liquide de fonctionnement (1) selon l'une des revendications précédentes, **caractérisé**
- **en ce que** la première structure de renforcement (21) est reliée à la paroi de récipient (10) au moyen d'une couche de promoteur d'adhésion disposée entre la première structure de renforcement (21) et la surface intérieure (11) de la paroi de récipient (10), et/ou
- **en ce que** la deuxième structure de renforcement (22) est reliée à la paroi de récipient (10) au moyen d'une couche de promoteur d'adhésion disposée entre la deuxième structure de renforcement (22) et la surface extérieure (12) de la paroi de récipient (10).

12. Récipient de liquide de fonctionnement (1) selon l'une des revendications précédentes, **caractérisé**
- **en ce que** la première structure de renforcement (21) est reliée à la paroi de récipient (10) au moyen d'une liaison par rivetage traversant la première structure de renforcement (21), et/ou
- **en ce que** la deuxième structure de renforcement (22) est reliée à la paroi de récipient (10) au moyen d'une liaison par rivetage traversant la deuxième structure de renforcement (22).

13. Récipient de liquide de fonctionnement (1) selon l'une des revendications précédentes, **caractérisé en ce que**
- la première structure de renforcement (21) comprend au moins une goupille de liaison (30) tournée vers la surface intérieure (11) de la paroi de récipient (10) et dotée d'une contre-dépouille (31), la goupille de liaison (30) ayant pénétré dans la paroi de récipient (10), de sorte que la contre-dépouille (31) soit plongée dans la paroi de récipient (10) et que la première structure de renforcement (21) soit reliée à la paroi de récipient (10) par complémentarité de forme, et/ou
- la deuxième structure de renforcement (22) comprend au moins une goupille de liaison (30) tournée vers la surface extérieure (12) de la paroi de récipient (10) et dotée d'une contre-dépouille (31), la goupille de liaison (30) ayant pénétré dans la paroi de récipient (10), de sorte que la contre-dépouille (31) soit plongée dans la paroi de récipient (10) et que la deuxième structure de renforcement (22) soit reliée à la paroi de récipient (10) par complémentarité de forme.
